# FASCICULE DE BREVET EUROPEEN

(11) **EP 4 608 881 B1**
(45) Date de publication et mention de la délivrance du brevet: **19.08.2026**
(21) Numéro de dépôt: 23789935.6
(22) Date de dépôt: 12.10.2023
(51) Int. Cl.: C08F 210/02, C08L 23/08

(54) **COMPOSITION DE CAOUTCHOUC**
KAUTSCHUKZUSAMMENSETZUNG
RUBBER COMPOSITION

(30) Priorité: 25.10.2022 FR 2211083
(43) Date de publication de la demande: 03.09.2025
(73) Titulaire: COMPAGNIE GENERALE DES ETABLISSEMENTS MICHELIN, 63000 Clermont-Ferrand (FR)
(72) Inventeur: JEAN-BAPTISTE-DIT-DOMINIQUE, François, 63040 CLERMONT-FERRAND CEDEX 09 (FR); NGO, Robert, 63040 CLERMONT-FERRAND CEDEX 09 (FR); RAVIER, Marielle, 63040 CLERMONT-FERRAND CEDEX 09 (FR); MAMMERI, Kahina, 63040 CLERMONT-FERRAND CEDEX 09 (FR)
(74) Mandataire: M.F.P. Michelin
(86) Numéro de dépôt international: PCT/EP2023/078327
(87) Numéro de publication internationale: WO 2024/088772

(56) Documents cités:
- EP-A1- 4 031 591

## Description

Le domaine de l'invention est celui des compositions de caoutchouc qui sont utilisables notamment pour la fabrication de pneumatiques et qui comprennent une charge renforçante et un élastomère diénique fortement saturé.

Un pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée. Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de silices hautement dispersibles dites "HDS" (Highly Dispersible Silica), capables de rivaliser, du point de vue du pouvoir renforçant, avec les noirs de carbone conventionnels de grade pneumatique.

La Demanderesse a décrit dans le document WO 2014114607 l'utilisation d'élastomères diéniques fortement saturés dans des compositions de caoutchouc pour pneumatique pour modifier le compromis de performance entre la résistance au roulement et l'usure. Ces élastomères diéniques fortement saturés contiennent des unités d'un 1,3-diène et plus de 50% en mole d'unités éthylène.

Poursuivant ses efforts, la Demanderesse a mis au point une nouvelle composition de caoutchouc faiblement hystérétique qui contient un élastomère diénique faiblement saturé et une charge renforçante qui contient une silice ou un noir de carbone, toujours en vue de diminuer la résistance au roulement d'un pneumatique. En effet, contre toute attente, elle a mis au point une composition de caoutchouc faiblement hystérétique qui comprend un élastomère diénique fortement saturé qui contient, à titre de groupe fonctionnel, en extrémité de chaîne de l'élastomère, une seule unité monomère d'un méthacrylate portant une fonction amine.

Ainsi un premier objet de l'invention est une composition de caoutchouc qui comprend un élastomère diénique fortement saturé contenant des unités d'un 1,3-diène et plus de 50% en mole d'unités éthylène et portant à l'une de ses extrémités de chaîne un groupe fonctionnel de formule -CH₂-CH(CH₃)-COOZ, Z étant un groupe hydrocarboné substitué par une fonction amine tertiaire, un système de réticulation et une charge renforçante qui comprend une silice ou un noir de carbone, l'élastomère diénique fortement saturé étant un copolymère d'éthylène et d'un 1,3-diène ou un copolymère d'éthylène, d'un 1,3-diène et d'une α-monooléfine.

Un deuxième objet de l'invention est un pneumatique qui comporte une bande de roulement, lequel pneumatique comprend une composition de caoutchouc conforme à l'invention, préférentiellement dans sa bande de roulement.

### Description détaillée

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" signifie parties en poids pour cent parties d'élastomère (du total des élastomères si plusieurs élastomères sont présents).

Dans le présent exposé de l'invention, le formalisme alkyl(Cₙ-Cₘ) est utilisé pour désigner un radical alkyle ayant n à m atomes de carbone, n étant un nombre entier supérieur ou égal à 1, m étant un nombre entier supérieur à n. A titre d'exemple, alkyl(C₁-C₂) désigne un radical alkyle ayant 1 à 2 atomes de carbone. De la même manière, alcoxy(Cₙ-Cₘ) désigne un radical alcoxy ayant n à m atomes de carbone.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Dans la présente invention, on entend par pneumatique (en anglais « tyre ») un bandage pneumatique ou non pneumatique. Un bandage pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un bandage non-pneumatique, quant à lui, comporte usuellement une base, conçue par exemple pour le montage sur une jante rigide, une armature de sommet, assurant la liaison avec une bande de roulement et une structure déformable, tels que des rayons, nervures ou alvéoles, cette structure étant disposée entre la base et le sommet. De tels bandages non-pneumatiques ne comprennent pas nécessairement de flanc. Des bandages non-pneumatiques sont décrits par exemples dans les documents WO 03/018332 et FR2898077. Selon l'un quelconque des modes de réalisation de l'invention, le pneumatique selon l'invention est préférentiellement un bandage pneumatique.

Par l'expression « à base de » utilisée pour définir les constituants du système catalytique (ou composition catalytique), on entend le mélange de ces constituants, ou le produit de la réaction d'une partie ou de la totalité de ces constituants entre eux.

L'élastomère utile aux besoins de l'invention est un élastomère diénique fortement saturé, puisque les unités éthylène représentent plus de 50% en mole de l'ensemble des unités monomères de l'élastomère diénique fortement saturé. De préférence, l'élastomère diénique fortement saturé est un copolymère statistique.

De manière connue, l'expression « unité éthylène » fait référence au motif-(CH₂-CH₂)- résultant de l'insertion de l'éthylène dans la chaîne élastomère. Les unités éthylène dans l'élastomère diénique fortement saturé représentent préférentiellement au moins 60% en mole de l'ensemble des unités monomères de l'élastomère diénique fortement saturé, plus préférentiellement au moins 65% en mole de l'ensemble des unités monomères de l'élastomère diénique fortement saturé. De manière encore plus préférentielle, les unités éthylène dans l'élastomère diénique fortement saturé représentent au moins 70% en mole de l'ensemble des unités monomères de l'élastomère diénique fortement saturé.

De préférence, les unités éthylène dans l'élastomère diénique fortement saturé représentent moins de 90% en mole de l'ensemble des unités monomères de l'élastomère diénique fortement saturé. De manière plus préférentielle, les unités éthylène représentent au plus 85% en mole de l'ensemble des unités monomères de l'élastomère diénique fortement saturé. De manière encore plus préférentielle, les unités éthylène représentent au plus 80% en mole de l'ensemble des unités monomères de l'élastomère diénique fortement saturé.

Selon un mode de réalisation avantageux, l'élastomère diénique fortement saturé comprend de 60% à moins de 90% molaire d'unité éthylène, particulièrement de 60% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 60% à 80% molaire d'unité éthylène, pourcentage molaire calculé sur la base de l'ensemble des unités monomères de l'élastomère diénique fortement saturé.

Selon un autre mode de réalisation avantageux, l'élastomère diénique fortement saturé comprend de 65% à moins de 90% molaire d'unité éthylène, particulièrement de 65% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 65% à 80% molaire d'unité éthylène, pourcentage molaire calculé sur la base de l'ensemble des unités monomères de l'élastomère diénique fortement saturé.

Selon encore un autre mode de réalisation avantageux de l'invention, l'élastomère diénique fortement saturé comprend de 70% à moins de 90% molaire d'unité éthylène, particulièrement de 70% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 70% à 80% molaire d'unité éthylène, pourcentage molaire calculé sur la base de l'ensemble des unités monomères de l'élastomère diénique fortement saturé.

L'élastomère diénique fortement saturé comprend aussi des unités 1,3-diène résultant de la polymérisation d'un 1,3-diène. De manière connue, l'expression « unité 1,3-diène » ou « unité diénique » fait référence aux unités résultant de l'insertion du 1,3-diène par une addition 1,4, une addition 1,2 ou une addition 3,4 dans le cas de l'isoprène par exemple.

Selon un mode de réalisation de l'invention, les unités 1,3-diène représentent au moins 35% en mole des unités monomères de l'élastomère diénique fortement saturé.

Selon un autre mode de réalisation de l'invention, les unités 1,3-diène représentent moins de 35% en mole des unités monomères de l'élastomère diénique fortement saturé.

L'élastomère diénique fortement saturé peut contenir des unités d'une α-monooléfine. On entend par α-monooléfine une α-oléfine qui contient au moins 3 atomes de carbone et qui a une seule double liaison carbone-carbone, les doubles liaisons dans les composés aromatiques n'étant pas prises en compte. Par exemple, le styrène est considéré comme une α-monooléfine. L'α-monooléfine est préférentiellement aromatique, plus préférentiellement le styrène ou un styrène dont le noyau benzénique est substitué par un ou plusieurs groupes alkyles. Encore plus préférentiellement, l'α-monooléfine est le styrène.

Le 1,3-diène est un seul composé, c'est-à-dire un seul (en anglais « one ») 1,3-diène, ou un mélange de 1,3-diènes qui se différencient les uns des autres par la structure chimique. Conviennent comme 1,3-diène les 1,3-diènes ayant de 4 à 20 atomes de carbone. De préférence, le 1,3-diène est le 1,3-butadiène, l'isoprène, le myrcène, le β-farnésène ou leurs mélanges tels qu'un mélange d'au moins deux d'entre eux. Le mélange d'au moins deux d'entre eux est avantageusement un mélange qui contient le 1,3-butadiène. Le mélange de 1,3-diènes est préférentiellement un mélange de 1,3-butadiène et de myrcène ou un mélange de 1,3-butadiène et de β-farnésène.

Selon un mode de réalisation particulièrement préférentiel de l'invention, le 1,3-diène est un mélange de 1,3-butadiène et de myrcène ou un mélange de 1,3-butadiène et de β-farnésène.

Selon un autre mode de réalisation particulièrement préférentiel de l'invention, le 1,3-diène est le 1,3-butadiène.

Avantageusement, l'élastomère diénique fortement saturé est un copolymère d'éthylène et d'un 1,3-diène, auquel cas les unités constitutives de l'élastomère diénique fortement saturé sont celles résultant de la polymérisation d'un 1,3-diène et de l'éthylène. En particulier, l'élastomère diénique fortement saturé est un copolymère d'éthylène et de 1,3-butadiène ou un copolymère d'éthylène, de 1,3-butadiène et de myrcène ou encore un copolymère d'éthylène, de 1,3-butadiène et de β-farnésène. Plus avantageusement, l'élastomère diénique fortement saturé est un copolymère statistique d'éthylène et de 1,3-butadiène ou un copolymère statistique d'éthylène, de 1,3-butadiène et de myrcène ou encore un copolymère statistique d'éthylène, de 1,3-butadiène et de β-farnésène.

Selon un mode de réalisation particulièrement préférentiel de l'invention, notamment lorsque le 1,3-diène est le 1,3-butadiène ou un mélange de 1,3-diènes dont un est le 1,3-butadiène, l'élastomère diénique fortement saturé contient des motifs 1,2-cyclohexane, motifs cycliques de formule (I).

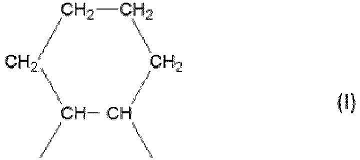

La présence de motif cyclique saturé à 6 membres, 1,2-cyclohexane, de formule (I) dans l'élastomère diénique fortement saturé peut résulter d'une série d'insertions très particulières de l'éthylène et du 1,3-butadiène dans la chaîne polymère au cours de sa croissance. Le mécanisme d'obtention d'une telle microstructure est par exemple décrit dans le document Macromolecules 2009, 42, 3774-3779. Lorsque l'élastomère diénique fortement saturé comprend des motifs de formule (I), il en contient préférentiellement au plus 15% en mole, le pourcentage étant exprimé par rapport à l'ensemble des unités monomères.

L'élastomère diénique fortement saturé a aussi pour autre caractéristique de porter à l'une de ses extrémités de chaîne un groupe fonctionnel de formule -CH₂-CH(CH₃)-COOZ. Le groupe fonctionnel est typiquement attaché de façon covalente à l'extrémité de chaîne de l'élastomère diénique fortement saturé, un des atomes de carbone du méthylène (CH₂) du groupe fonctionnel étant lié de façon covalente à un atome de carbone constitutif de l'unité monomère terminale de l'élastomère diénique fortement saturé.

Le symbole Z désigne un groupe hydrocarboné substitué par une fonction amine tertiaire. De préférence, Z désigne un groupe hydrocarboné acyclique saturé substitué par une fonction amine tertiaire, le groupe hydrocarboné acyclique saturé substitué par une fonction amine tertiaire étant avantageusement un alkyle ayant 1 à 3 atomes de carbone. La fonction amine tertiaire est préférentiellement un groupe N, N-dialkylamino, les groupes alkyles substituant l'atome d'azote ayant préférentiellement chacun 1 à 3 atomes de carbone, mieux 1 atome de carbone ou 2 atomes de carbone. Les groupes alkyles substituant l'atome d'azote sont préférentiellement identiques selon l'un quelconque des modes de réalisation de l'invention.

Selon un mode de réalisation tout particulièrement préférentiel, Z désigne un groupe N,N-dialkyl(C₁-C₃)aminoalkyle (C₁-C₃), préférentiellement le 2-(N,N-diméthylamino)éthyle, le 2-(N,N-diéthylamino)éthyle ou le 2-(N,N-diisopropylamino)éthyle, plus préférentiellement le 2-(N,N-diméthylamino)éthyle.

L'élastomère diénique fortement saturé fonctionnel utile aux besoins de l'invention peut être préparé par un procédé qui comprend les étapes successives a), b) et c),
- l'étape a) étant la polymérisation d'un mélange monomère contenant le 1,3-diène et l'éthylène et le cas échéant l'α-monooléfine en présence d'un système catalytique à base au moins d'un métallocène de formule (la) et d'un organomagnésien

   {P(Cp¹)(Cp²)Nd(BH₄)_{(1+y)-}L_{y}-Nₓ} (la)

   Cp¹ et Cp², identiques ou différents, étant choisis dans le groupe constitué par les groupes fluorényles, les groupes cyclopentadiényles et les groupes indényles, les groupes étant substitués ou non substitués,
   P étant un groupe pontant les deux groupes Cp¹ et Cp², et comprenant un atome de silicium ou de carbone,
   Nd désignant l'atome de néodyme,
   L représentant un métal alcalin choisi dans le groupe constitué par le lithium, le sodium et le potassium,
   N représentant une molécule d'un éther,
   x, nombre entier ou non, étant égal ou supérieur à 0,
   y, nombre entier, étant égal ou supérieur à 0,
   l'oléfine étant l'éthylène ou un mélange d'éthylène et d'une α-monooléfine,
- l'étape b) étant la réaction d'un méthacrylate avec le produit de réaction de la polymérisation de l'étape a),
- l'étape c) étant une réaction de terminaison de chaîne.

L'étape a) du procédé est une réaction de polymérisation d'un mélange monomère contenant le 1,3-diène et l'éthylène et le cas échéant l'α-monooléfine qui permet de préparer les chaînes de l'élastomère diénique fortement saturé, chaînes en croissance destinées à réagir dans l'étape suivante, étape b), avec un agent de fonctionnalisation, un méthacrylate.

De préférence, le mélange monomère de l'étape a) contient plus de 50% en mole d'éthylène, le pourcentage étant exprimé par rapport au nombre total de moles de monomères du mélange monomère de l'étape a). Lorsque le mélange monomère contient une α-monooléfine, telle que le styrène, il contient préférentiellement moins de 40% en mole de l'α-monooléfine, le pourcentage étant exprimé par rapport au nombre total de moles de monomères du mélange monomère de l'étape a). De préférence, le mélange monomère de l'étape a) est un mélange du 1,3-diène et d'éthylène.

La copolymérisation du mélange monomère peut être conduite conformément aux demandes de brevet WO 2007054223 A2 et WO 2007054224 A2 en utilisant un système catalytique composé d'un métallocène et d'un organomagnésien.

Dans la présente demande, on entend par métallocène un complexe organométallique dont le métal, en l'espèce l'atome de néodyme, est lié à une molécule nommée ligand et constituée de deux groupes Cp¹ et Cp² reliés entre eux par un pont P. Ces groupes Cp¹ et Cp², identiques ou différents, sont choisis dans le groupe constitué par les groupes fluorényles, les groupes cyclopentadiényles et les groupes indényles, ces groupes pouvant être substitués ou non substitués.

Selon l'invention, le métallocène utilisé comme constituant de base dans le système catalytique répond à la formule (la)

{P(Cp¹)(Cp²)Nd(BH₄)_{(1+y)-}L_{y}-Nₓ} (la)

P étant un groupe pontant les deux groupes Cp¹ et Cp², et comprenant un atome de silicium ou de carbone,
Cp¹ et Cp², identiques ou différents, étant choisis dans le groupe constitué par les groupes fluorényles, les groupes cyclopentadiényles et les groupes indényles, les groupes étant substitués ou non substitués,
Nd désignant l'atome de néodyme,
L représentant un métal alcalin choisi dans le groupe constitué par le lithium, le sodium et le potassium,
N représentant une molécule d'un éther,
x, nombre entier ou non, étant égal ou supérieur à 0,
y, nombre entier, étant égal ou supérieur à 0.

Comme éther convient tout éther qui a le pouvoir de complexer le métal alcalin, notamment le diéthyléther, le méthyltétrahydrofurane et le tétrahydrofurane.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que SiMe₃. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer ceux substitués en position 2, 7, 3 ou 6, particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

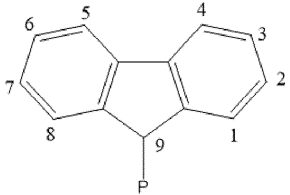

A titre de groupes cyclopentadiényles substitués, on peut citer ceux substitués aussi bien en position 2 (ou 5) qu'en position 3 (ou 4), particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après. On rappelle qu'une substitution en position 2 ou 5 est également dénommée substitution en alpha du pont.

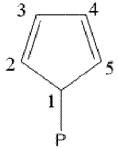

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

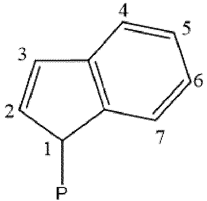

De préférence, Cp¹ et Cp², identiques ou différents, sont des cyclopentadiényles substitués en alpha du pont, des fluorényles substitués, des indényles substitués ou fluorényle de formule C₁₃H₈ ou bien indényle de formule C₉H₇. De manière plus préférentielle, Cp¹ et Cp², identiques ou différents, sont choisis dans le groupe constitué par les groupes fluorényles substitués et le groupe fluorényle non substitué de formule C₁₃H₈. Avantageusement, Cp¹ et Cp² sont identiques et représentent chacun un groupe fluorényle non substitué de formule C₁₃H₈, représenté par le symbole Flu.

De préférence, le pont P reliant les groupes Cp¹ et Cp² est de formule ZR₁R₂, dans laquelle Z représente un atome de silicium ou de carbone, R₁ et R₂, identiques ou différents, représentent chacun un groupe alkyle comprenant de 1 à 20 atomes de carbone, de préférence un méthyle. Dans la formule ZR₁R₂, Z représente avantageusement un atome de silicium, Si.

Mieux, le métallocène est de formule (I-1), (I-2), (I-3), (I-4) ou (I-5) :

[Me₂Si(Flu)₂Nd(µ-BH₄)₂Li(THF)] (I-1)

[{Me₂SiFlu₂Nd(µ-BH₄)₂Li(THF)}₂] (I-2)

[Me₂SiFlu₂Nd(µ-BH₄)(THF)] (I-3)

[{Me₂SiFlu₂Nd(µ-BH₄)(THF)}₂] (I-4)

[Me₂SiFlu₂Nd(µ-BH₄)] (I-5)

dans laquelle Flu représente le groupe C₁₃H₈.

Le métallocène utile à la synthèse du système catalytique peut se trouver sous la forme de poudre cristallisée ou non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 A2 ou WO 2007054223 A2. Le métallocène peut être préparé de façon traditionnelle par un procédé analogue à celui décrit dans la demande de brevet WO 2007054224 A2 ou WO 2007054223 A2, notamment par réaction dans des conditions inertes et anhydres du sel d'un métal alcalin du ligand avec un borohydrure de la terre rare, le néodyme, dans un solvant adapté, tel un éther, comme le diéthyléther ou le tétrahydrofurane ou tout autre solvant connu de l'homme du métier. Après réaction, le métallocène est séparé des sous-produits de réaction par les techniques connues de l'homme du métier, telles que la filtration ou la précipitation dans un second solvant. Le métallocène est au final séché et isolé sous forme solide.

L'organomagnésien, autre constituant de base du système catalytique est le co-catalyseur du système catalytique. Typiquement l'organomagnésien peut être un diorganomagnésien ou un halogénure d'un organomagnésien. De préférence, l'organomagnésien est de formule (Ila) ou (IIb), lesquelles R³ et R⁴, identiques ou différents, représentent un groupe carboné, X est un atome d'halogène.

MgR³R⁴ (IIa)

XMgR⁵ (IIb)

On entend par groupe carboné un groupe qui contient un ou plusieurs atomes de carbone. Le groupe carboné peut être un groupe hydrocarboné (groupe hydrocarbyle) ou bien un groupe hétérohydrocarboné, c'est-à-dire un groupe comportant en plus des atomes de carbone et d'hydrogène un ou plusieurs hétéroatomes. A titre d'organomagnésiens ayant un groupe hétérohydrocarboné peuvent convenir les composés décrits comme agents de transfert dans la demande de brevet WO2016092227 A1. Le groupe carboné représenté par les symboles R³ et R⁴ sont préférentiellement des groupes hydrocarbonés.

Les groupes carbonés représentés par R³ et R⁴ peuvent être aliphatiques ou aromatiques. Ils peuvent contenir un ou plusieurs hétéroatomes tels qu'un atome d'oxygène, d'azote, de silicium ou de soufre. De préférence, ils sont alkyles, phényles ou aryles. Ils peuvent contenir 1 à 20 atomes de carbone.

Les alkyles représentés R³ et R⁴ peuvent contenir 2 à 10 atomes de carbone et sont notamment l'éthyle, le butyle, l'octyle.

Les aryles représentés R³ et R⁴ peuvent contenir 7 à 20 atomes de carbone et sont notamment un phényle substitué par un ou plusieurs alkyles tels que méthyle, éthyle, isopropyle.

R³ et R⁴ sont préférentiellement des alkyles contenant 2 à 10 atomes de carbone, des phényles ou des aryles contenant 7 à 20 atomes de carbone.

Selon un mode de réalisation particulier de l'invention, R³ comprend un noyau benzénique dont deux atomes de carbone sont substitués, l'un des deux est substitué par un méthyle, un éthyle ou un isopropyle ou forme un cycle avec l'atome de carbone qui est son plus proche voisin, le deuxième atome de carbone étant substitué par un méthyle, un éthyle ou un isopropyle, l'atome de magnésium étant en position ortho par rapport à chacun desdits deux atomes de carbone et R⁴ est un alkyle. Selon ce mode de réalisation particulier, R³ est avantageusement le 1,3-diméthylphényle, le 1,3-diéthylphényle, le mésityle, ou le 1,3,5 triéthylphényle et R⁴ est avantageusement éthyle, butyle, octyle.

Selon un autre mode de réalisation particulier de l'invention, R³ et R⁴ sont des alkyles contenant 2 à 10 atomes de carbone, notamment éthyle, butyle, octyle.

Par exemple conviennent comme organomagnésien le butyléthylmagnésium, le butyloctylmagnésium, le chlorure d'éthylmagnésium, le chlorure de butylmagnésium, le bromure d'éthylmagnésium, le bromure de butylmagnésium, le chlorure d'octylmagnésium, le bromure d'octylmagnésium, le 1,3-diméthylphénylbutylmagnésium, le 1,3-diéthylphényléthylmagnésium, le butylmésitylmagnésium, l'éthylmésitylmagnésium, le 1,3-diéthylphénylbutylmagnésium, le 1,3-diéthylphényléthylmagnésium, le 1,3-diisopropylphénylbutylmagnésium, le 1,3-disopropylphényléthylmagnésium, le 1,3,5-triéthylphénylbutylmagnésium, le 1,3,5-triéthylphényléthylmagnésium, le 1,3,5-triisopropylphénylbutylmagnésium, le 1,3,5-triisopropylphényléthylmagnésium.

Les composés de formule (IIa) et (IIb) qui sont des réactifs de Grignard sont bien connus, même certains d'entre eux sont des produits commerciaux. Pour leur synthèse, on peut par exemple se référer aussi à la collection de volumes de « Organic Synthesis ».

Comme tout composé organomagnésien, le composé organomagnésien constituant le système catalytique, notamment de formule (IIa) ou (IIb) peut se présenter sous la forme d'une entité monomère ou sous la forme d'une entité polymère. A titre d'illustration, l'organomagnésien (Ila) peut se présenter sous la forme d'une entité monomère (MgR³R⁴)₁ ou sous la forme d'une entité polymère (MgR³R⁴)ₚ, p étant un nombre entier supérieur à 1, notamment dimère (MgR³R⁴)₂.

Par ailleurs, qu'il soit sous la forme d'une entité monomère ou polymère, l'organomagnésien peut également se présenter sous la forme d'une entité coordinée à une ou plusieurs molécules d'un solvant, de préférence d'un éther tel que le diéthyléther, le tétrahydrofurane ou le méthyltétrahydrofurane.

Selon l'un quelconque des modes de réalisation de l'invention, l'organomagnésien est de préférence de formule (IIa).

Les quantités de co-catalyseur et de métallocène mises en réaction sont telles que le rapport entre le nombre de moles de Mg du co-catalyseur et le nombre de moles de la terre rare du métallocène, le néodyme, va de préférence de 0,5 à 200, de manière plus préférentielle de 1 à moins de 20. La plage de valeurs allant de 1 à moins de 20 est notamment plus favorable pour l'obtention de copolymères de masses molaires élevées.

Selon un mode de réalisation, le système catalytique est préparé de façon traditionnelle par un procédé analogue à celui décrit dans la demande de brevet WO 2007054224 A2 ou WO 2007054223 A2. Par exemple on fait réagir dans un solvant hydrocarboné le co-catalyseur, en l'espèce l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène, de préférence dans un solvant hydrocarboné aliphatique tel que le méthylcyclohexane. Généralement après sa synthèse, le système catalytique est utilisé en l'état pour l'étape a).

Selon un autre mode de réalisation, le système catalytique est préparé par un procédé analogue à celui décrit dans la demande de brevet WO 2017093654 A1 ou dans la demande de brevet WO 2018020122 A1 : il est dit de type préformé. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h un monomère de préformation. Le monomère de préformation est utilisé de préférence selon un rapport molaire (monomère de préformation / métal du métallocène) allant de 5 à 1000, préférentiellement de 10 à 500. Avant son utilisation en polymérisation, le système catalytique de type préformé peut être stocké sous atmosphère inerte, notamment à une température allant de -20°C à la température ambiante (23°C). Le système catalytique de type préformé a pour constituant de base un monomère de préformation choisi parmi les 1,3-diènes, l'éthylène et leurs mélanges. En d'autres termes, le système catalytique dit préformé contient outre le métallocène et le co-catalyseur un monomère de préformation. Le 1,3-diène à titre de monomère de préformation peut être le 1,3-butadiène, l'isoprène ou encore un 1,3-diène de formule CH₂=CR ⁶-CH=CH₂, le symbole R⁶ représentant un groupe hydrocarboné ayant 3 à 20 atomes de carbone, en particulier le myrcène ou le β-farnésène. Le monomère de préformation est préférentiellement le 1,3-butadiène.

Le système catalytique se présente typiquement dans un solvant qui est préférentiellement le solvant dans lequel il a été préparé, et la concentration en métal de la terre rare, c'est-à-dire en néodyme, de métallocène est alors comprise dans un domaine allant préférentiellement de 0,0001 à 0,2 mol/L plus préférentiellement de 0,001 à 0,03 mol/L.

Comme toute synthèse faite en présence de composé organométallique, la synthèse du métallocène, la synthèse de l'organomagnésien et la synthèse du système catalytique ont lieu dans des conditions anhydres sous atmosphère inerte. Typiquement, les réactions sont conduites à partir de solvants et de composés anhydres sous azote ou argon anhydre.

La polymérisation du mélange monomère est conduite de préférence en solution, en continu ou discontinu. Le solvant de polymérisation est typiquement un solvant hydrocarboné, de préférence aliphatique. A titre d'exemple de solvant hydrocarboné aliphatique convient tout particulièrement le méthylcyclohexane. Le mélange monomère peut être introduit dans le réacteur contenant le solvant de polymérisation et le système catalytique ou inversement le système catalytique peut être introduit dans le réacteur contenant le solvant de polymérisation et le mélange monomère. Le mélange monomère et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 40 à 150°C, préférentiellement 40 à 120°C. L'homme du métier adapte les conditions de polymérisation telles que la température de polymérisation, la concentration en chacun des réactifs, la pression du réacteur en fonction de la composition du mélange monomère, du réacteur de polymérisation, de la microstructure et de la macrostructure souhaitées de la chaîne copolymère.

La polymérisation est conduite préférentiellement à pression constante en monomères. Un ajout continu de chacun des monomères ou de l'un d'eux peut être réalisé dans le réacteur de polymérisation, auquel cas le réacteur de polymérisation est un réacteur alimenté. Ce mode de réalisation est tout particulièrement adapté pour une incorporation statistique des monomères. De préférence, la polymérisation de l'étape a) est une polymérisation statistique, ce qui se traduit par une incorporation statistique des monomères du mélange monomère utilisé dans l'étape a).

Une fois que le taux de conversion des monomères souhaité est atteint dans la réaction de polymérisation de l'étape a), on procède à l'étape b).

L'étape b) du procédé conforme à l'invention met en présence un agent de fonctionnalisation, un méthacrylate, avec le produit de réaction de l'étape a) pour introduire le groupe fonctionnel utile aux besoins de l'invention, une unité monomère méthacrylate, à l'une des extrémités de la chaîne de l'élastomère diénique fortement saturé produit à l'issue de l'étape a). L'étape b) est une réaction de fonctionnalisation de l'extrémité de chaîne de l'élastomère diénique fortement saturé sans qu'il y ait de polymérisation subséquente du méthacrylate.

Le méthacrylate est un méthacrylate dit fonctionnel et est de formule CH₂=CCH₃COOR', R' étant un groupe hydrocarboné substitué par une fonction amine tertiaire.

Le groupe hydrocarboné du symbole R' est préférentiellement saturé. Le nombre d'atomes de carbone du groupe hydrocarboné du symbole R' n'est pas limité en soi. Le groupe hydrocarboné peut contenir jusqu'à 20 atomes de carbone. Préférentiellement, le groupe hydrocarboné du symbole R' contient de 1 à 6 atomes de carbone, plus préférentiellement de 1 à 3 atomes de carbone. Préférentiellement le groupe hydrocarboné du symbole R' est un groupe hydrocarboné acyclique saturé substitué par ladite fonction amine tertiaire.

De préférence, le méthacrylate est de formule CH₂=CCH₃COOR' dans laquelle R' est un alkyle, groupe hydrocarboné acyclique saturé, qui est substitué par un groupe dialkylamino, en particulier le méthacrylate est un méthacrylate de N,N-dialkyl(C₁-C₃)aminoalkyle (C₁-C₃), préférentiellement le méthacrylate de 2-(diméthylamino)éthyle, le méthacrylate de 2-(diéthylamino)éthyle, le méthacrylate de 2-(diisopropylamino)éthyle, plus préférentiellement le méthacrylate de 2-(diméthylamino)éthyle.

Les méthacrylates utiles aux besoins de l'invention peuvent être des produits commerciaux. Ce sont généralement des produits disponibles commercialement. Lorsque les méthacrylates sont conditionnés en présence d'un stabilisant, comme c'est le cas pour la plupart des méthacrylates commerciaux, ils sont utilisés typiquement après élimination du stabilisant qui peut être réalisée de manière bien connue par distillation ou par traitement sur des colonnes d'alumine.

De préférence, l'étape b) est conduite dans un solvant hydrocarboné aliphatique, tel que le méthylcyclohexane. Avantageusement, elle est conduite dans le milieu réactionnel issu de l'étape a). Elle est généralement mise en œuvre par l'ajout du méthacrylate au produit de réaction de l'étape a) dans son milieu réactionnel sous agitation.

Avant l'ajout du méthacrylate, le réacteur est de préférence dégazé et inerté. Le dégazage du réacteur permet d'éliminer les monomères résiduels gazeux et facilite aussi l'ajout du méthacrylate dans le réacteur. L'inertage du réacteur, par exemple à l'azote, permet de ne pas désactiver les liaisons carbone métal présentes dans le milieu réactionnel et nécessaires à la réaction de fonctionnalisation du copolymère. Le méthacrylate peut être ajouté pur ou dilué dans un solvant hydrocarboné, de préférence aliphatique comme le méthylcyclohexane. Le méthacrylate est laissé au contact du produit de réaction de l'étape a) durant le temps nécessaire à la réaction de fonctionnalisation de l'extrémité de chaîne du copolymère. La réaction de fonctionnalisation peut être suivie typiquement par analyse chromatographique pour suivre la consommation du méthacrylate. La réaction de fonctionnalisation est conduite préférentiellement à une température allant de 23 à 120 °C, pendant 1 à 60 minutes sous agitation. La réaction de fonctionnalisation est conduite préférentiellement avec un excès molaire de méthacrylate par rapport au nombre de moles de néodyme et de magnésium. Pour obtenir une fonctionnalisation quasi quantitative, le ratio molaire entre le nombre de moles du méthacrylate et le nombre de moles de néodyme et de magnésium est supérieur à 2, en particulier supérieur ou égal à 4. Le ratio molaire entre le nombre de moles du méthacrylate et le nombre de moles de néodyme et de magnésium va préférentiellement de 4 à 50, plus préférentiellement de 4 à 10.

Une fois l'extrémité de chaîne modifiée, l'étape b) est suivie de l'étape c).

L'étape c), réaction de terminaison de chaîne, est typiquement une réaction qui permet de désactiver les sites réactifs encore présents dans le milieu réactionnel issu de l'étape b). A l'étape c), un agent de terminaison de chaîne est mis au contact du produit de réaction de l'étape b), généralement dans son milieu réactionnel, par exemple en ajoutant l'agent de terminaison au milieu réactionnel à l'issue de l'étape b) ou en versant le milieu réactionnel obtenu à l'issue de l'étape b) sur une solution contenant l'agent de terminaison. L'agent de terminaison est généralement ajouté en excès par rapport aux nombres de liaisons carbone -métal comme C-Mg et C-Nd présentes dans le milieu réactionnel. L'agent de terminaison est typiquement un composé protique, composé qui comporte un proton relativement acide. A titre d'agent de terminaison, on peut citer l'eau, les acides carboxyliques notamment les acides gras en C₂-C₁₈ comme l'acide acétique, l'acide stéarique, les alcools, aliphatiques ou aromatiques, comme le méthanol, l'éthanol, l'isopropanol, des antioxydants phénoliques.

Après réaction avec un composé protique, le procédé conduit à l'élastomère diénique fortement saturé portant à l'une de ses extrémités de chaîne une fonction amine tertiaire.

L'élastomère diénique fortement saturé portant à l'une de ses extrémités de chaîne une fonction amine tertiaire, peut être séparé du milieu réactionnel de l'étape c) selon des procédés bien connus de l'homme du métier, par exemple par une opération d'évaporation du solvant sous pression réduite ou par une opération de stripping à la vapeur d'eau.

De préférence, la composition de caoutchouc contient plus de 50 pce de l'élastomère diénique fortement saturé utile aux besoins de l'invention, de manière plus préférentielle au moins 80 pce de l'élastomère diénique fortement saturé utile aux besoins de l'invention. Le complément à 100 pce peut être constitué tout ou partie d'un élastomère diénique et éthylénique dépouvu du groupe fonctionnel utile aux besoins de l'invention de formule -CH₂-CH(CH₃)-COOZ telle que décrite dans la présente demande. La composition de caoutchouc peut comprendre aussi un élastomère choisi dans le groupe des élastomères diéniques constitué par les polybutadiènes, les polyisoprènes, les copolymères de butadiène, les copolymères d'isoprène et leur mélange. Avantageusement, le taux de l'élastomère diénique fortement saturé utile aux besoins de l'invention est de 100 pce. L'élastomère diénique fortement saturé utile aux besoins de l'invention peut être constitué d'un mélange d'élastomères diéniques fortement saturés utiles aux besoins de l'invention qui se différencient des uns des autres par leurs microstructures ou par leurs macrostructures.

La composition de caoutchouc a aussi pour caractéristique essentielle de contenir une charge renforçante qui comprend une silice ou un noir de carbone.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titre de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po :* 0.05 à 0.17). La surface spécifique CTAB est la surface externe déterminée selon la norme française NF T 45-007 de novembre 1987 (méthode B).

L'état physique sous lequel se présente la silice est indifférent, que ce soit sous forme de poudre, de microperles, de granulés, ou encore de billes. Bien entendu on entend également par silice des mélanges de différentes silices renforçantes, en particulier de silices hautement dispersibles telles que décrites ci-dessus.

L'homme du métier comprendra qu'à titre de charge équivalente de la silice décrite dans le présent paragraphe, pourrait être utilisée une charge renforçante d'une autre nature, notamment organique telle que du noir de carbone, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Comme noirs de carbone conviennent tous les noirs de carbone, notamment les noirs du type HAF, ISAF, SAF, FF, FEF, GPF et SRF conventionnellement utilisés dans les compositions de caoutchouc pour pneumatiques (noirs dits de grade pneumatique). Ces noirs de carbone peuvent être utilisés à l'état isolé, tels que disponibles commercialement, ou sous tout autre forme, par exemple comme support de certains des additifs de caoutchouterie utilisés.

Selon un mode de réalisation de l'invention, la charge renforçante comprend un mélange de silice et de noir de carbone. Lorsque la composition de caoutchouc contient un mélange de silice et de noir de carbone, le noir de carbone est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la silice.

Selon un mode de réalisation tout particulièrement préférentiel de l'invention, la charge renforçante contient plus de 50% en masse de silice. De manière plus préférentielle, la charge renforçante contient plus de 50% en masse de silice et contient du noir de carbone à un taux inférieur ou égal à 5 pce.

Pour coupler la silice à l'élastomère, on utilise de manière bien connue un agent de couplage, notamment un silane, (ou agent de liaison) au moins bifonctionnel destiné à assurer une connexion suffisante entre la silice (surface de ses particules) et l'élastomère On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (III)

J - G - Sₓ - G - J (III)

dans laquelle :
- x est un entier de 2 à 8 (de préférence de 2 à 5) ;
- les symboles G, identiques ou différents, représentent un radical hydrocarboné divalent (de préférence un groupe alkylène en C₁-C₁₈ ou un groupe arylène en C₆-C₁₂, plus particulièrement un alkylène en C₁-C₁₀, notamment en C₁-C₄, en particulier le propylène) :
- les symboles J, identiques ou différents, répondent à l'une des trois formules ci-après: 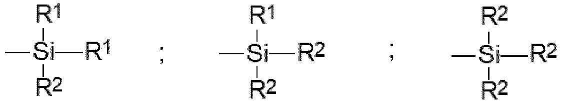 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle)
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupes fonctionnels azo-dicarbonyle, tels que décrits par exemple dans les demandes de brevets WO 2006/125532, WO 2006/125533, WO 2006/125534.

La teneur en agent de couplage est avantageusement inférieure à 30 pce, étant entendu qu'il est en général souhaitable d'en utiliser le moins possible. Typiquement le taux d'agent de couplage représente de 0,5% à 15% en poids par rapport à la quantité de silice. Son taux est préférentiellement compris entre 0,5 et 16 pce, plus préférentiellement compris dans un domaine allant de 3 à 10 pce. Ce taux est aisément ajusté par l'homme du métier selon le taux de silice utilisé dans la composition.

De manière préférentielle, le taux total de charge renforçante, qu'il s'agisse de silice ou de noir de carbone ou encore de leur mélange, est compris entre 30 et 200 pce, plus préférentiellement entre 40 et 160 pce. L'une quelconque de ces plages de taux total de charge renforçante peut s'appliquer à l'un quelconque des modes de réalisation de l'invention.

La composition de caoutchouc conforme à l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru.

La composition de caoutchouc a pour autre caractéristique essentielle de contenir un système de réticulation. La réticulation chimique permet la formation de liaisons covalentes entre les chaînes d'élastomère. Le système de réticulation peut être un système de vulcanisation ou un ou plusieurs composés peroxydes. Selon l'un quelconque des modes de réalisation de l'invention, le système de réticulation est préférentiellement un système de vulcanisation.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine). Le soufre est utilisé à un taux préférentiel de 0.5 à 12 pce, en particulier de 1 à 10 pce. L'accélérateur primaire de vulcanisation est utilisé à un taux préférentiel compris entre 0.5 et 10 pce, plus préférentiellement compris entre 0.5 et 5 pce. On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de préférence de 0.01 à 10 pce. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, que ces derniers soient de nature aromatique ou non-aromatique, notamment des résines plastifiantes hydrocarbonées, des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des pigments, des agents de protection tels que cires anti-ozone, anti-ozonants chimiques, anti-oxydants.

La composition de caoutchouc selon l'invention peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

De manière générale, tous les constituants de base de la composition comprise dans le pneumatique de l'invention, à l'exception du système de réticulation, à savoir la charge inorganique renforçante, l'agent de couplage le cas échéant, sont incorporés de manière intime, par malaxage, à l'élastomère, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception de l'agent de réticulation chimique. La durée totale du malaxage, dans cette phase non-productive, est de préférence comprise entre 1 et 15 min. Après refroidissement du mélange ainsi obtenu au cours de la première phase non-productive, on incorpore alors le système de réticulation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme semi-fini de pneumatique pour véhicule.

Ainsi selon un mode de réalisation particulier de l'invention, la composition de caoutchouc conforme à l'invention, pouvant être soit à l'état cru (avant réticulation ou vulcanisation), soit à l'état cuit (après réticulation ou vulcanisation), est un produit semi-fini qui peut être utilisé dans un pneumatique, notamment comme bande de roulement de pneumatique.

En résumé, l'invention est mise en œuvre avantageusement selon l'un quelconque des modes de réalisation suivants 1 à 25 :
Mode 1 : Composition de caoutchouc qui comprend un élastomère diénique fortement saturé contenant des unités d'un 1,3-diène et plus de 50% en mole d'unités éthylène et portant à l'une de ses extrémités de chaîne un groupe fonctionnel de formule -CH₂-CH(CH₃)-COOZ, Z étant un groupe hydrocarboné substitué par une fonction amine tertiaire, un système de réticulation et une charge renforçante qui comprend une silice ou un noir de carbone, l'élastomère diénique fortement saturé étant un copolymère d'éthylène et d'un 1,3-diène ou un copolymère d'éthylène, d'un 1,3-diène et d'une α-monooléfine.

Les caractéristiques précitées de la présente invention, ainsi que d'autres, seront mieux comprises à la lecture de la description suivante des exemples de réalisation de l'invention, donnés à titre illustratif et non limitatif.

### Exemples

### Résonance magnétique nucléaire (RMN) :

Les produits de fonctionnalisation des copolymères sont caractérisés par spectrométrie RMN ¹H, ¹³C, ²⁹Si. Les spectres RMN sont enregistrés sur un Spectromètre Brüker Avance III 500 MHz équipé d'une cryo-sonde « large bande » BBFOz-grad 5 mm. L'expérience RMN ¹H quantitative, utilise une séquence simple impulsion 30° et un délai de répétition de 5 secondes entre chaque acquisition. 64 à 256 accumulations sont réalisées. L'expérience RMN ¹³C quantitative, utilise une séquence simple impulsion 30° avec un découplage proton et un délai de répétition de 10 secondes entre chaque acquisition. 1024 à 10240 accumulations sont réalisées. Les expériences bidimensionnelles ¹H/¹³C sont utilisées dans le but de déterminer la structure des polymères fonctionnels. L'axe des déplacements chimiques ¹H est calibré par rapport à l'impureté protonée du solvant (CDCl₃) à δ_{1H} = 7,20 ppm. L'axe des déplacements chimiques ¹³C est calibré par rapport au signal du solvant (CDCl₃) à δ_{13C} = 77 ppm.

La structure chimique de chaque polymère fonctionnel est identifiée par RMN (¹H, ¹³C).

### Analyse SEC 3D :

Pour déterminer la masse molaire moyenne en nombre (Mn), et le cas échant la masse molaire moyenne en poids (Mw) et l'indice de polydispersité (Ip ou également notée *Ð* = Mw/Mn) des polymères, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI dépend de la concentration de l'échantillon, de la constante du détecteur RI et de la valeur du dn/dc.

Pour déterminer les masses molaires moyennes, on utilise la solution à 1g/l dans le tétrahydrofuranne précédemment préparée et filtrée que l'on injecte dans la chaîne chromatographique. L'appareillage utilisé est une chaîne chromatographique « Wyatt ». Le solvant d'élution est le tétrahydrofurane contenant 250 ppm de BHT (2,6-diter-butyle 4-hydroxy toluène), le débit est de 1 mL.min⁻¹, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 µL. Le système de détection est composé d'un viscosimètre différentiel Wyatt de dénomination commerciale « VISCOSTAR Il », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur de l'incrément d'indice de réfraction dn/dc de la solution de l'échantillon obtenue ci-dessus. Le logiciel d'exploitation des données chromatographiques est le système « ASTRA de Wyatt ».

### Détermination de la température de transition vitreuse des polymères :

La température de transition vitreuse est mesurée au moyen d'un calorimètre différentiel ("Differential Scanning Calorimeter") selon la norme ASTM D3418 (1999).

### Propriétés dynamiques :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10 Hz, dans les conditions normales de température (23°C) selon la norme ASTM D 1349-99. On effectue un balayage en amplitude de déformation de 0,1% à 50% (cycle aller), puis de 50% à 0,1% (cycle retour). Le résultat exploité est le facteur de perte tan(δ). Pour le cycle retour, on indique la valeur maximale de tan(δ) observée, noté tan(δ)max. Les valeurs de tan(δ)max sont données en base 100, la valeur 100 étant attribuée à la composition témoin (T). Plus la valeur de tan(δ)max est faible, plus l'hystérèse de la composition de caoutchouc est faible.

### Préparation des élastomères :

Le métallocène [{Me₂SiFlu₂Nd(µ-BH₄)₂Li(THF)}]₂ est préparé selon le mode opératoire décrit dans la demande de brevet WO 2007054224.

Le butyloctylmagnésium BOMAG (20% dans l'heptane, à 0.88 mol L⁻¹) provient de Chemtura et est stocké dans un tube de Schlenk sous atmosphère inerte.

L'éthylène, de qualité N35, provient de la société Air Liquide et est utilisé sans purification préalable.

Le 1,3-butadiène et le myrcène sont purifiés sur gardes d'alumine.

L'agent de fonctionnalisation utilisé est le 2-(diméthylamino)éthyl méthacrylate venant de Sigma-Aldrich. Le méthacrylate commercial est utilisé après purification sur gardes d'alumine et après barbotage à l'azote.

Le solvant méthylcyclohexane (MCH) provenant de chez BioSolve est séché et purifié sur colonne d'alumine dans une fontaine à solvant provenant de chez mBraun et utilisés sous atmosphère inerte.

Toutes les réactions sont effectuées sous atmosphère inerte.

Synthèse de copolymères d'éthylène, de 1,3-butadiène et de myrcène non fonctionnel : élastomère E1 :
Dans un réacteur en acier inoxydable de 90 L est introduit 64 L de MCH et une solution de BOMAG (23 mmol) dans le méthylcyclohexane (0,01 mol/L). Le réacteur est chauffé à 80°C et les monomères sont ajoutés selon un débit contrôlé afin de maintenir constant la composition du mélange monomère dans le milieu de polymérisation. Le débit d'éthylène est fixé à 40 g/min, le myrcène et le butadiène sont injectés indépendamment et leurs débits sont asservis au débit de l'éthylène selon le ratio massique myrcène/éthylène égal à 1,62 et selon le ratio massique butadiène/éthylène égal à 0,25.

Lorsque le réacteur atteint la pression de 8 bars, du système catalytique (6,25 mmol de Nd) préformé à une concentration de 0,007 mol/L préparé selon le protocole précédent est introduit dans le milieu de polymérisation. Il est procédé à la réaction de terminaison des chaînes par stoppage avec du méthanol lorsque 5 à 6 Kg de polymère sont formés : le polymère est récupéré après une étape de stripping. Le polymère est ensuite séché sur une machine à vis sans fin équipée d'une monovis à 150°C.

Le système catalytique est un système catalytique préformé. Il est préparé dans le méthylcyclohexane à partir du métallocène, le [Me₂Si(Flu)₂Nd(µ-BH₄)₂Li(THF)], du co-catalyseur, le butyloctylmagnésium (BOMAG), et d'un monomère de préformation, le 1,3-butadiène. Il est préparé selon une méthode de préparation conforme au paragraphe II.1 de la demande de brevet WO 2017093654 A1.

Dans une bouteille steinie de 500 mL contenant 380 mL de méthylcyclohexane préalablement dégazé à l'azote, sont introduits successivement 5,7 mL d'une solution de butyloctylmagnésium dans l'heptane (0,88 M, 5,0 mmol) et 1,462 g du complexe {(Me₂Si(C₁₃H₈)₂)Nd(-BH₄)₂Li(THF)}₂ (nombre de mole de Nd, nNd = 2,3 mmol), préparé selon la demande de brevet WO2007/054224 (complexe 1). 17 mL de 1,3-butadiène (également désigné ci-après butadiène) sont ajoutés dans la bouteille steinie à 17°C. Le contenu de la bouteille steinie est alors porté à 80°C pendant 4h sous agitation. La solution catalytique résultante est stockée au congélateur à -25°C.

### Synthèse de copolymères d'éthylène, de 1,3-butadiène et de myrcène fonctionnel : élastomère E2 :

Les élastomères fonctionnels sont préparés dans les mêmes conditions de synthèse que leurs homologues non fonctionnels à la différence près que la réaction de terminaison des chaînes est remplacée par une réaction de fonctionnalisation décrite selon le mode opératoire de fonctionnalisation décrit-ci-après.

### Mode opératoire de fonctionnalisation :

Lorsque la conversion en monomères souhaitée est atteinte (5 à 6 Kg de polymère), le contenu du réacteur est dégazé, l'agent de fonctionnalisation, le méthacrylate, est introduit dans le milieu de polymérisation sous atmosphère inerte par surpression à raison de 40 équivalents par rapport au nombre de moles de Nd et de Mg introduites dans le réacteur. Le milieu réactionnel est agité pendant 15 minutes à 80°C. Le milieu réactionnel est désactivé avec du méthanol. Le polymère est récupéré après une étape de stripping. Le polymère est ensuite séché sur une machine à vis sans fin équipée d'une monovis à 150°C. Il est ensuite analysé par SEC (THF), RMN ¹H, ¹³C.

Les caractéristiques des élastomères préparés figurent dans le tableau 1. Les analyses SEC et RMN confirment que l'extrémité de chaîne de l'élastomère E2 est fonctionnalisée par une seule unité monomère méthacrylate portant la fonction amine.

**Tableau 1**

| Elastomère | % unité éthylene (mol) | % unité butadiène (mol) | % unité myrcène (mol) | % cycle (1) (mol) | Mn (g/mol) | Tg (°C) |
|---|---|---|---|---|---|---|
| E1 | 74 | 9 | 13 | 4 | 174000 | -54 |
| E2 | 73 | 10 | 13 | 4 | 180000 | -54 |

| | | | | | | |
|---|---|---|---|---|---|---|
| (1) motif cyclique 1,2-cyclohexane de formule (I) | | | | | | |

### Préparation des compositions de caoutchouc :

Des compositions de caoutchouc dont la formulation exprimée en pce (parties en poids pour cent parties en poids d'élastomère) figure dans le tableau 2 ont été préparées selon le mode opératoire suivant : on introduit dans un mélangeur interne Polylab de 85 cm³ (taux de remplissage final : environ 70% en volume), dont la température initiale de cuve est d'environ 100°C, successivement l'élastomère, la silice, l'agent de couplage, ainsi que les divers autres ingrédients a l'exception du système de vulcanisation. On conduit alors un travail thermomécanique (phase non-productive) en une étape, qui dure au total environ 5 min, jusqu'à atteindre une température maximale de « tombée » de 160°C. On récupère le mélange ainsi obtenu, on le refroidit puis on incorpore du soufre et l'accélérateur sur un mélangeur (homo-finisseur) à 25°C, en mélangeant le tout (phase productive) pendant une dizaine de minutes. Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, après vulcanisation à 150°C.

La composition de caoutchouc C1 contient un élastomère diénique fortement saturé portant en extrémité de chaîne une unité monomère du méthacrylate, élastomère E2. Elle est conforme à l'invention. La composition de caoutchouc T1 contient un élastomère diénique fortement saturé qui n'a pas été fonctionnalisé, E1. Il est synthétisé selon le même mode opératoire que l'élastomère E2 à la différence près que l'agent de fonctionnalisation n'est pas ajouté et qu'il est procédé directement à l'étape de précipitation du milieu réactionnel dans le méthanol après dégazage du réacteur.

Les résultats figurent dans le tableau 3.

La composition de caoutchouc C1 présente une hystérèse bien plus faible que celle de son témoin, la composition T1. Cette diminution d'hystérèse est attribuée à la fonctionnalisation de l'extrémité de chaîne de l'élastomère diénique fortement saturé par une seule unité monomère d'un méthacrylate portant une fonction amine tertiaire, puisque ce résultat est obtenu sans que la modification de l'élastomère par le méthacrylate s'accompagne de la formation d'un bloc polyméthacrylate qui aurait conduit à un changement de la température de transition vitreuse de la composition de caoutchouc et donc à un changement de certaines propriétés des compositions de caoutchouc, telles que les propriétés rhéologiques, en particulier la rigidité.

**Tableau 2**

| Compositions (en pce) | T1 | C1 |
|---|---|---|
| Elastomère E1 | 100 | |
| Elastomère E2 | | 100 |
| Silice (1) | 70 | 70 |
| Noir de carbone (2) | 2 | 2 |
| Agent de couplage (3) | 7 | 7 |
| DPG (4) | 1.2 | 1.2 |
| Cire Ozone (5) | 2.5 | 2.5 |
| Antioxydant (6) | 3.8 | 3.8 |
| Antioxydant (7) | 1.6 | 1.6 |
| Acide stéarique (8) | 3 | 3 |
| ZnO (9) | 0.9 | 0.9 |
| Soufre | 0.9 | 0.9 |
| CBS (10) | 2.3 | 2.3 |

| | | |
|---|---|---|
| (1) "Zeosil 1165 MP" de Solvay-Rhodia sous forme de microperles (2) N234 (3) Silane liquide (TESPT) « Si69 » de la société Evonik (4) Diphénylguanidine « Perkacit DPG » de la société Flexsys (5) Cire anti-ozone « VARAZON 4959 » de la société Sasol Wax (6) N-(1,3-diméthylbutyl)-N'-phényl-p-phénylènediamine « Santoflex 6PPD » de la société FLEXSYS (7) Tétraméthylquinone (8) Acide stéarique « Pristerene 4931 » de la société Uniqema (9) Oxyde de Zinc de grade industriel de la société Umicore (10) N-cyclohexyl-2-benzothiazol-sulfénamide « Santocure CBS » de la société Flexsys | | |

**Tableau 3**

| Composition | T1 | C1 |
|---|---|---|
| tan(δ)max 23°C | 100 | 90 |

## Revendications

1. Composition de caoutchouc qui comprend un élastomère diénique fortement saturé contenant des unités d'un 1,3-diène et plus de 50% en mole d'unités éthylène et portant à l'une de ses extrémités de chaîne un groupe fonctionnel de formule -CH₂-CH(CH₃)-COOZ, Z étant un groupe hydrocarboné substitué par une fonction amine tertiaire, un système de réticulation et une charge renforçante qui comprend une silice ou un noir de carbone, l'élastomère diénique fortement saturé étant un copolymère d'éthylène et d'un 1,3-diène ou un copolymère d'éthylène, d'un 1,3-diène et d'une α-monooléfine.

2. Composition de caoutchouc selon la revendication 1 dans laquelle Z désigne un groupe hydrocarboné acyclique saturé substitué par une fonction amine tertiaire.

3. Composition de caoutchouc selon la revendication 2 dans laquelle le groupe hydrocarboné acyclique saturé substitué par une fonction amine tertiaire est un alkyle ayant 1 à 3 atomes de carbone.

4. Composition de caoutchouc selon l'une quelconque des revendications 1 à 3 dans laquelle la fonction amine tertiaire est un groupe N, N-dialkylamino.

5. Composition de caoutchouc selon la revendication 4 dans laquelle les groupes alkyles substituant l'atome d'azote ont chacun 1 à 3 atomes de carbone, préférentiellement 1 atome de carbone ou 2 atomes de carbone.

6. Composition de caoutchouc selon l'une quelconque des revendications 1 à 5 dans laquelle Z désigne un groupe N,N-dialkyl(C₁-C₃)aminoalkyle (C₁-C₃), préférentiellement le 2-(N,N-diméthylamino)éthyle, le 2-(N,N-diéthylamino)éthyle ou le 2-(N,N-diisopropylamino)éthyle, plus préférentiellement le 2-(N,N-diméthylamino)éthyle.

7. Composition de caoutchouc selon l'une quelconque des revendications 1 à 6 dans laquelle le copolymère est un copolymère d'éthylène et d'un 1,3-diène.

8. Composition de caoutchouc selon l'une quelconque des revendications 1 à 7 dans laquelle les unités éthylène dans l'élastomère diénique fortement saturé représentent moins de 90% en mole de l'ensemble des unités monomères de l'élastomère diénique fortement saturé.

9. Composition de caoutchouc selon l'une quelconque des revendications 1 à 8 dans laquelle le 1,3-diène est le 1,3-butadiène, l'isoprène, le myrcène, le β-farnésène ou leurs mélanges.

10. Composition de caoutchouc selon l'une quelconque des revendications 1 à 9 dans laquelle le 1,3-diène est le 1,3-butadiène ou un mélange de 1,3-butadiène et de myrcène ou encore un mélange de 1,3-butadiène et de β-farnésène.

11. Composition de caoutchouc selon l'une quelconque des revendications 1 à 10 dans laquelle le copolymère contient des motifs 1,2-cyclohexane de formule (I).

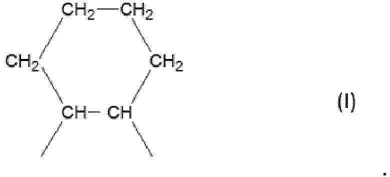

12. Composition de caoutchouc selon l'une quelconque des revendications 1 à 11 dans laquelle l'élastomère diénique fortement saturé est un copolymère statistique.

13. Composition de caoutchouc selon l'une quelconque des revendications 1 à 12 dans laquelle la charge renforçante contient plus de 50% en masse de silice.

14. Pneumatique qui comporte une bande de roulement, lequel pneumatique comprend une composition de caoutchouc définie à l'une quelconque des revendications 1 à 13, préférentiellement dans sa bande de roulement.

## Patentansprüche

1. Kautschukzusammensetzung, die ein hoch gesättigtes Dienelastomer, das Einheiten eines 1,3-Diens und mehr als 50 Mol-% Ethyleneinheiten enthält und an einem seiner Kettenenden eine funktionelle Gruppe mit der Formel -CH₂-CH(CH₃)-COOZ trägt, wobei Z eine durch eine tertiäre Aminfunktion substituierte Kohlenwasserstoffgruppe ist, ein Vernetzungssystem und einen verstärkenden Füllstoff, der eine Kieselsäure oder einen Ruß enthält, umfasst, wobei das hoch gesättigte Dienelastomer ein Copolymer aus Ethylen und einem 1,3-Dien oder ein Copolymer aus Ethylen, einem 1,3-Dien und einem α-Monoolefin ist.

2. Kautschukzusammensetzung nach Anspruch 1, wobei Z eine gesättigte acyclische Kohlenwasserstoffgruppe bezeichnet, die durch eine tertiäre Aminfunktion substituiert ist.

3. Kautschukzusammensetzung nach Anspruch 2, wobei die durch eine tertiäre Aminfunktion substituierte gesättigte acyclische Kohlenwasserstoffgruppe ein Alkyl mit 1 bis 3 Kohlenstoffatomen ist.

4. Kautschukzusammensetzung nach einem der Ansprüche 1 bis 3, wobei die tertiäre Aminfunktion eine N,N-Dialkylaminogruppe ist.

5. Kautschukzusammensetzung nach Anspruch 4, wobei die Alkylgruppen, die das Stickstoffatom substituieren, jeweils 1 bis 3 Kohlenstoffatome, vorzugsweise 1 Kohlenstoffatom oder 2 Kohlenstoffatome, aufweisen.

6. Kautschukzusammensetzung nach einem der Ansprüche 1 bis 5, wobei Z eine N,N-Dialkyl(C₁-C₃)aminoalkyl(C₁-C₃)-Gruppe, vorzugsweise 2-(N,N-Dimethylamino)ethyl, 2-(N,N-Diethylamino)ethyl oder 2-(N,N-Diisopropylamino)ethyl, besonders bevorzugt 2-(N,N-Dimethylamino)ethyl bezeichnet.

7. Kautschukzusammensetzung nach einem der Ansprüche 1 bis 6, wobei es sich bei dem Copolymer um ein Copolymer aus Ethylen und einem 1,3-Dien handelt.

8. Kautschukzusammensetzung nach einem der Ansprüche 1 bis 7, wobei die Ethyleneinheiten in dem hoch gesättigten Dienelastomer weniger als 90 Mol-% aller Monomereinheiten des hoch gesättigten Dienelastomers ausmachen.

9. Kautschukzusammensetzung nach einem der Ansprüche 1 bis 8, wobei es sich bei dem 1,3-Dien um 1,3-Butadien, Isopren, Myrcen, β-Farnesen oder Mischungen davon handelt.

10. Kautschukzusammensetzung nach einem der Ansprüche 1 bis 9, wobei es sich bei dem 1,3-Dien um 1,3-Butadien oder eine Mischung aus 1,3-Butadien und Myrcen oder aber eine Mischung aus 1,3-Butadien und β-Farnesen handelt.

11. Kautschukzusammensetzung nach einem der Ansprüche 1 bis 10, wobei das Copolymer 1,2-Cyclohexan-Einheiten mit der Formel (I) enthält.

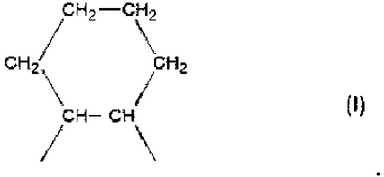

12. Kautschukzusammensetzung nach einem der Ansprüche 1 bis 11, wobei es sich bei dem hoch gesättigten Dienelastomer um ein statistisches Copolymer handelt.

13. Kautschukzusammensetzung nach einem der Ansprüche 1 bis 12, wobei der verstärkende Füllstoff mehr als 50 Massen-% Kieselsäure enthält.

14. Reifen, der einen Laufstreifen umfasst, wobei der Reifen eine Kautschukzusammensetzung nach einem der Ansprüche 1 bis 13 umfasst, vorzugsweise in seinem Laufstreifen.

## Claims

1. Rubber composition that comprises a highly saturated diene elastomer containing 1,3-diene units and more than 50 mol% of ethylene units and bearing at one of its chain ends a functional group of formula -CH₂-CH(CH₃)-COOZ, Z being a hydrocarbon group substituted by a tertiary amine function, a crosslinking system and a reinforcing filler that comprises a silica or a carbon black, the highly saturated diene elastomer being a copolymer of ethylene and a 1,3-diene or a copolymer of ethylene, a 1,3-diene and an α-monoolefin.

2. Rubber composition according to Claim 1, wherein Z denotes a saturated acyclic hydrocarbon group substituted by a tertiary amine function.

3. Rubber composition according to Claim 2, wherein the saturated acyclic hydrocarbon group substituted by a tertiary amine function is an alkyl having 1 to 3 carbon atoms.

4. Rubber composition according to any one of Claims 1 to 3, wherein the tertiary amine function is an N,N-dialkylamino group.

5. Rubber composition according to Claim 4, wherein the alkyl groups substituting the nitrogen atom each have 1 to 3 carbon atoms, preferably 1 carbon atom or 2 carbon atoms.

6. Rubber composition according to any one of Claims 1 to 5, wherein Z denotes an N,N-di(C₁-C₃)alkylamino(C₁-C₃)alkyl group, preferably 2-(N,N-dimethylamino)ethyl, 2-(N,N-diethylamino)ethyl or 2-(N,N-diisopropylamino)ethyl, more preferably 2-(N,N-dimethylamino)ethyl.

7. Rubber composition according to any one of Claims 1 to 6, wherein the copolymer is a copolymer of ethylene and a 1,3-diene.

8. Rubber composition according to any one of Claims 1 to 7, wherein the ethylene units in the highly saturated diene elastomer represent less than 90 mol% of all of the monomer units in the highly saturated diene elastomer.

9. Rubber composition according to any one of Claims 1 to 8, wherein the 1,3-diene is 1,3-butadiene, isoprene, myrcene, β-farnesene or mixtures thereof.

10. Rubber composition according to any one of Claims 1 to 9, wherein the 1,3-diene is 1,3-butadiene or a mixture of 1,3-butadiene and myrcene or else a mixture of 1,3-butadiene and β-farnesene.

11. Rubber composition according to any one of Claims 1 to 10, wherein the copolymer contains 1,2-cyclohexane units of formula (I):

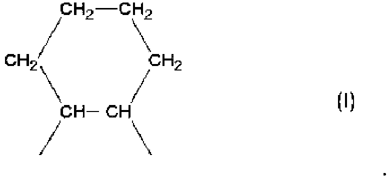

12. Rubber composition according to any one of Claims 1 to 11, wherein the highly saturated diene elastomer is a statistical copolymer.

13. Rubber composition according to any one of Claims 1 to 12, wherein the reinforcing filler contains more than 50% by mass of silica.

14. Tyre that includes a tread, said tyre comprising a rubber composition defined in any one of Claims 1 to 13, preferably in the tread of said tyre.
